# EUROPEAN PATENT SPECIFICATION

(11) **EP 0 876 241 B1**
(45) Date of publication and mention of the grant of the patent: **27.10.1999**
(21) Application number: 97901252.3
(22) Date of filing: 13.01.1997
(51) Int. Cl.: B23Q 9/00, B23Q 1/54, B23D 57/00, B28D 1/18, B25H 1/00, B24B 7/22

(54) **PORTABLE MACHINE WITH POSITIONING DEVICE FOR THE WORKING OF HARD MATERIALS**
HANDWERKZEUG MIT POSITIONIERVORRICHTUNG FÜR DIE BEARBEITUNG VON HARTEN MATERIALIEN
MACHINE PORTATIVE A DISPOSITIF DE POSITIONNEMENT POUR L'USINAGE DE MATERIAUX DURS

(30) Priority: 15.01.1996 IT RM960020
(43) Date of publication of application: 11.11.1998
(73) Proprietor: Di Mattia, Mauro, 04011 Aprilia (IT)
(72) Inventor: Di Mattia, Mauro, 04011 Aprilia (IT)
(74) Representative: Perrotta, Luciana, Dr.
(86) International application number: IT9700004
(87) International publication number: WO9726111

(56) References cited:
- EP-A- 0 611 191
- WO-A-94/01261
- DE-A- 2 240 949
- US-A- 4 572 715

## Description

The invention regards a portable machine with positioning device which can cut, trim and polish slabs of stone, marble, granite and similar such materials.

In the field of stone and marble working, many portable machines, both electrical and oleodynamic, are generally used, each of which carries out a specific function such as cutting or trimming. Furthermore, polishing is generally carried out by hand.

In fact, in respect to the known solutions it is impossible to transform a trimming machine into a cutting machine or into a polishing machine merely by means of disks, plates or similar tools therefore obtaining several functions.

In particular the machine described in WO-A-94/01261 (L. DE NONI), quite different from the present invention, carries out only a regulation in the height thereby allowing only a function. By means of the above mentioned machine cited in WO-A-94/01261 it is impossible utilize tools and stopping flanges currently in use, limiting therefore its utilization to a specific and expensive copying system carried out with own and specific tools; on the contrary, the machine of the present invention allows the integration with the latest technics and known working systems and also the utilization of tools and stopping flanges more used. In addition, these machines are dangerous for the operator when in operation as a result of their various uncovered mechanisms.

The portable machine described in this patent application can carry out several functions which have hitherto been carried out by different machines built according to existing technology, as above mentioned.

Furthermore, the machine's mechanisms are covered and housed in the body of the machine, this increasing the level of safety during use.

This portable machine for the working of slabs of marble, granite and similar stone materials, comprises a work mechanism, separably connected to a positioning device, having a preferably oleodynamic motor and a tool spindle driven by said motor, said work machanism with positioning device being mounted to a sliding plate adapted for the movement on the slabs. Said items are connected to a separate trolley-borne central unit.

The central unit means any system able to produce oleo-dynamic power.

Using a positioning device which allows rotation around any direction this invention combines the two afore-indicated functions, namely cutting and trimming, and allows others such as polishing of the edges and surfaces which are currently carried out by hand.

It should also be borne in mind that the work mechanism can be separated from the positioning device mounted on the sliding plate and fixed to a workbench (with screws, pins or bayonets), or else can be hand-held for manual use. Furthermore, it can be fixed to the mobile column of a workbench and be programmed to move in all directions.

The invention therefore has a wide range of potential applications:
- for the cutting, trimming and polishing of slabs of stone and hard materials generally;
- for engraving on marble or similar materials, for example on memorial stones, road signs, etc.;
- for artistic and/or craft purposes, for example working marble for furniture, kitchens, bathrooms, etc.

As a result of the above, this machine should be considered as a 'universal' machine for the slab and marble working sector generally. 'Universal' here means that it can carry out many types of work.

It is important to emphasise the advantage of reduced costs due to the fact that (as noted above) the positioning device allows the same machine to be used for several operations, thus avoiding the use and outlay for the acquisition and maintenance of several machines. The machine also produces savings as regards both time and space.

A further advantage derives from the fact that the covering of the transmission mechanisms provides additional security against accidents (safety being increasingly in demand as a result of the EEC norms) as:
- the operator does not come into contact with the electrical parts;
- the mechanisms are housed in the body of the machine itself.

The invention is described below for the purposes of illustration only, reference being made to the annexed drawings which refer to a version of the invention currently preferred by the inventor.
- Figure 1 gives an overall view of the machine, showing the sliding plate 3 on which the work mechanism 2 and the positioning device 4 are mounted; all parts are connected to the central unit 1 producing oleodynamic power;
- Figure 2 shows the work mechanism 2 respectively from above (2B) and in vertical section (2A);
- Figure 3 shows the positioning device 4 in lateral section (3A) and from the front (3B);
- Figure 4 shows the positioning of the machine for the cutting operation and
- Figure 5 shows the machine during cutting;
- Figure 6 shows the positioning of the machine for the trimming operation;
- Figure 7 shows the machine during trimming.

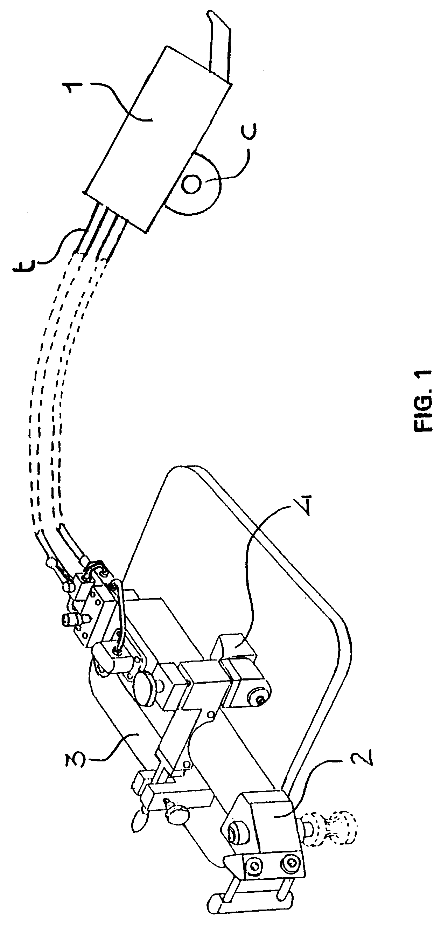

As regards the drawings, the central unit 1 (separate from the main body of the machine) shown in Fig. 1 is a central unit and consists of a oil-pressure pump operated by a motor (for example an electrical motor) of suitable power, an oil tank, a water cooler for the pump oil and appropriate "t" joints for the oil intake and discharge piping. (It is not considered necessary to describe the central unit as it is a well-known device). All the above is mounted on a trolley "c" to facilitate movement at workplaces.

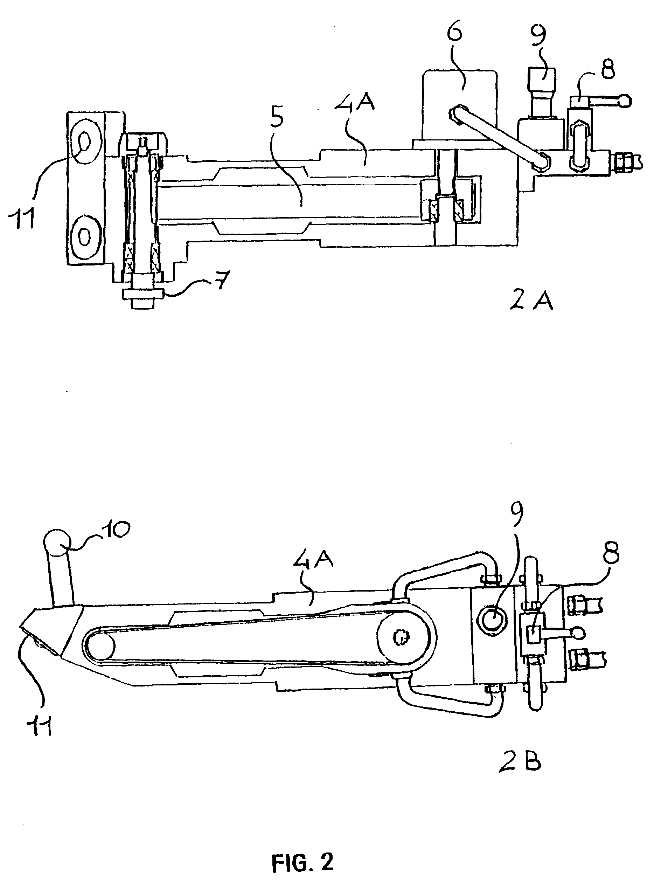

The work mechanism (Figs. 2A and 2B) consists of a closed body 4A, for greater work safety, containing the transmission with the overdrive 5 which from the oleodynamic motor 6 transmits the rotation motion to the axle 7, which is nothing more than a traditional spindle.

A ball valve 8, which acts as a manual by-pass and a, oil-flow regulation valve 9, which regulates the spindle's revs are fixed on the rear part of the body 4A.

On the front part of the body 4A, under the handle 10, are fixed two rotating spheres 11 in plastic or another material with the same characteristics which facilitate the flow of the machine when it is in contact with the slabs to be worked.

Said work mechanism can be separated from the positioning device for workbench or manual operations.

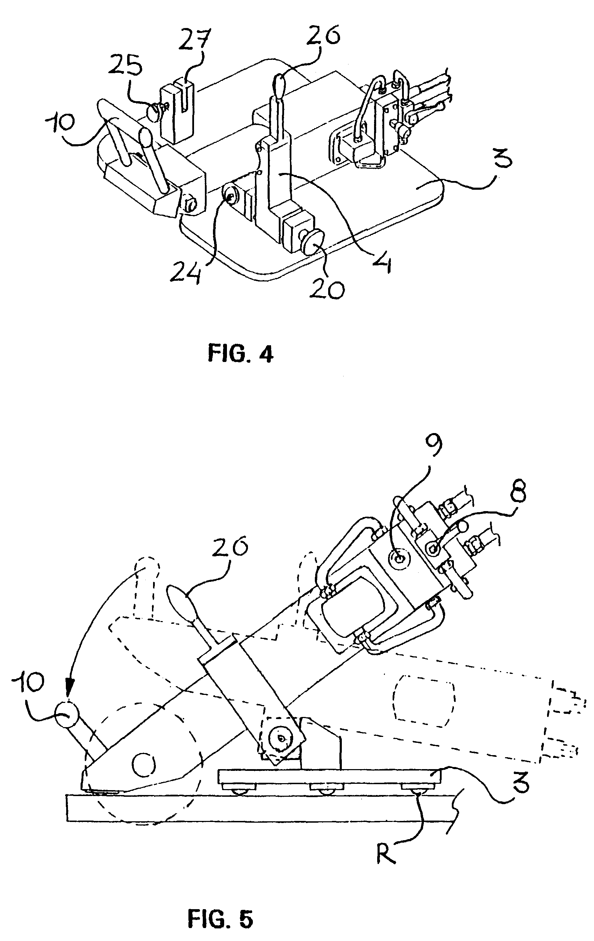

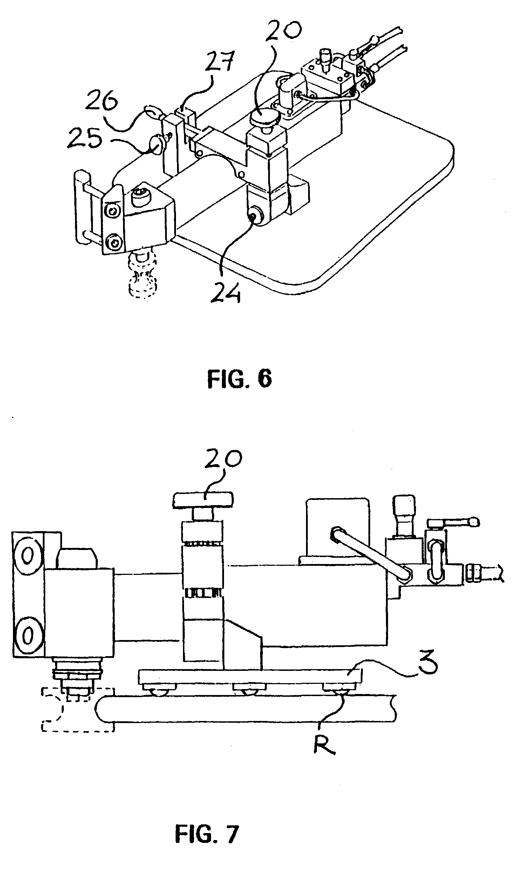

Underneath the sliding plate 3 are fixed a certain number of rotating spheres R (as shown in FIG. 5 and 7) of plastic or similar material, ( such as those 11 shown in Fig. 2) which allow the plate to slide and do not scratch the slabs and suchlike which are to be worked. On the top of the sliding plate is fixed the positioning device 4.

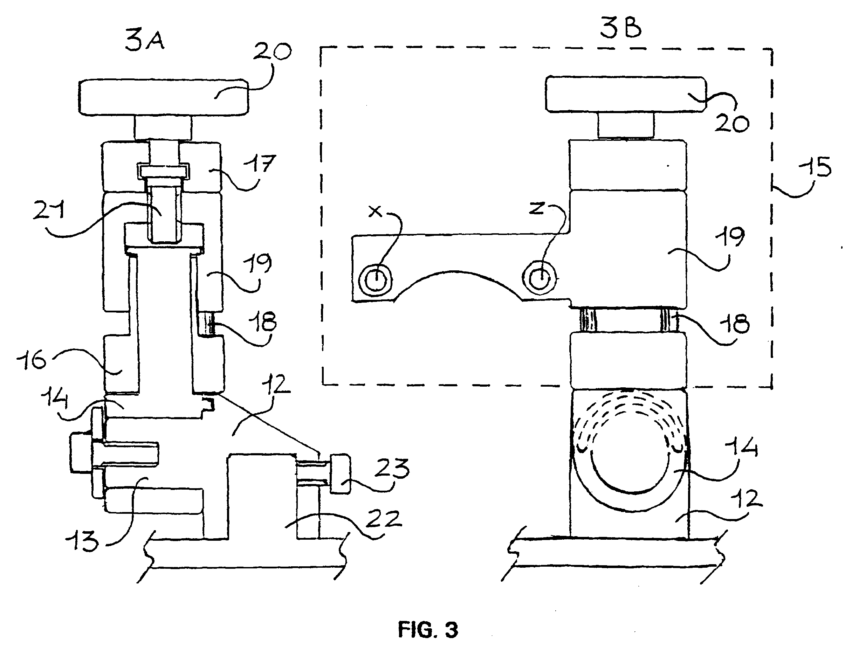

The positioning device 4 (Figs. 1, 3A and 3B), fixed to the sliding plate 3, consists of a base block 12 which has a large pin 13 on whose axis the intermediary support 14 can rotate up to 90°.

On the intermediary support 14 can rotate, in turn, the height regulation device 15, on which the work mechanism 2 is mounted . The height regulation device 15 consists of two fixed parts 16 and 17 separated by two columns 18. Part 19, on which the work mechanism 2 is mounted, can slide between these two parts, the work mechanism 2 being fixed to said part 19 by the appropriate elements at points x and z.

Turning the knob 20, which is integral with the screw 21, increases or decreases the distance between part 19 and fixed part 16.

Loosening the screw 23 frees the positioning device to rotate around the pin 22 which is fixed to the sliding plate 3.

After having reached its new position, the positioning device can be locked by tightening the screw 23 (see figures 4 and 6).

### Description of two of the machine's functions

The operations necessary to position the machine for cutting (see Fig. 4) are as follows:
1 - loosen screw 24 by half a turn;
2 - loosen the knob lock 25;
3 - holding handle 26, turn a full 90° the regulation device which has the work mechanism mounted on it;
4 - tighten screw 24.

At this point, having mounted the cutting wheel on the spindle, the machine is positioned to cut as shown in Figure 5.

The operations necessary to position the machine for trimming (see Fig. 6) after having mounted the trimming grinder wheel on the spindle, are as follows:
1 - loosen screw 24 by half a turn;
2 - holding handle 26, turn 90° the regulation device till it is inside the square column 27;
3 - regulate the centering of said grinder wheel according to the thickness of the slab to be worked by knob 20 (Fig. 7);
4 - tighten screw 24 and knob 25.

At this point the machine is ready to trim the slab.

## Claims

1. Portable machine for the working of slabs of marble, granite and similar stone materials, comprising a work mechanism (2) having a preferably oleo-dynamic motor and a tool spindle driven by said motor, said work mechanism being mounted to a sliding plate (3) adapted for movement on the slab,
characterised in that
said work mechanism is separably connected to a positioning device (4) at two points (x, z) by keepers, said positioning device being fixed to the sliding plate and comprising means for allowing the work mechanism to rotate about a first axis orthogonal to the sliding plate, a second axis orthogonal to said first axis and a third axis rotatable about and orthogonal to said second axis, so as to change the position of the spindle axis between horizontal and vertical positions, thereby allowing cutting, trimming, polishing and the like operations of the surfaces and edges of the slab.

2. Portable machine as per claim 1 characterised by the fact that the motion transmission is housed in a closed body (4A) of the work mechanism (2).

3. Machine as per claim 2, characterised by, the fact that the work mechanism (2) housed in the closed body (4A), consists in a transmission with an overdrive (5), an oleo-dynamic motor (6), an axle (7), a ball valve (8), an oil-flow regulation valve (9), a handle (10) and rotating spheres (11).

4. Machine as per claim 1, characterised by the fact that the positioning device (4) includes a base block (12) which has a large pin (13) on whose axis an intermediary support (14) is rotatable about the second axis, and a, height regulation device (15), on which the work mechanism (2) is mounted for rotation, on said support (14) about the third axis.

5. Machine as per claim 4, characterised by the fact that said height regulation device (15) consists of two fixed parts (16, 17) separated by two columns (18), and a part (19), on which the work mechanism (2) is mounted, being able to slide between the two fixed parts.

## Patentansprüche

1. Tragbahre Maschine zur Bearbeitung von Platten aus Marmor, Granit und ähnlichen Steinmaterialien, die einen Arbeitsmechanismus (2) beinhaltet, der vorzugsweise einen öldynamischen Motor und einen Arbeitszapfen besitzt, welcher durch besagten Motor angetrieben wird, wobei der besagte Arbeitsmechanismus auf eine Gleitplatte (3) montiert ist, die zur Bewegung auf der Platte geeignet ist,
dadurch charakterisiert, daß
besagter Arbeitsmechanismus getrennt mit einer Positioniervorrichtung (4) an zwei Punkten (x, z) durch Halterungen verbunden ist, wobei besagte Positioniervorrichtung an die Gleitplatte befestigt ist und Vorrichtungen beinhaltet, die es dem Arbeitsmechanismus erlauben, um eine erste Achse orthogonal zur Gleitplatte zu rotieren, um eine zweite Achse, die orthogonal zu besagter erster Achse ist und um eine dritte Achse, die orthogonal um besagte zweiter Achse rotierbar ist, so daß die Position der Zapfenachse zwischen horizontalen und vertikalen Positionen geändert werden können und auf diese Weise das Schneiden, Bearbeiten, Glätten sowie ähnliche Oberflächen- und Eckenbearbeitungen dar Platte möglich sind.

2. Tragbare Maschine, gemäß Patentanspruch 1 dadurch charakterisiert, daß die Bewegungsübertragung sich in einem geschlossenen Gehäuse (4A) des Arbeitsmechanismus (2) befindet.

3. Maschine, gemäß Patentanspruch 2 dadurch charakterisiert, daß der sich in einem geschlossenen Gehäuse (4A) befindende Arbeitsmechanismus (2) aus einer Getriebeübertragung (5), einem öldynamischen Motor (6), einer Welle (7), einem Kugelventil (8), einem Ölflußregulierventil (9), einem Griff (10) und rotierenden Kugeln (11) besteht.

4. Maschine, gemäß Patentanspruch 1 dadurch charakterisiert, daß die Positioniervorrichtung (4) einen Basisblock (12) beinhaltet , der einen breiten Bolzen (13) besitzt, auf dessen Achse eine Zwischenstütze (14) um die Zweite Achse rotieren kann und eine Höheneinstellvorrichtung (15), auf die der Arbeitsmechanismus (2) an der besagten Stütze (14) zur Rotierung um besagte dritte Achse montiert ist.

5. Maschine, gemäß Patentanspruch 4 dadurch charakterisiert, daß besagte Höhenverstellvorrichtung (15) aus zwei festen Teilen (16, 17) besteht, die durch Zwei Säulen (18) getrennt sind und einem Teil (19), auf den der Arbeitsmechanismus (2) montiert ist, so daß er zwischen den beiden festen Teilen verschiebbar ist.

## Revendications

1. Machine portative pour travailler les tranches de marbre, de granit et de matériaux rocheux similaires, comprenant un mécanisme de travail (2) possédant de préférence un moteur oléodynamique et une broche toupilleuse commandée par ledit moteur, ledit mécanisme de travail étant monté sur une plaque roulante (3) adaptée pour le mouvement sur la tranche,
caractérisée en ce que
ledit mécanisme de travail est connecté séparément à un dispositif de mise en position (4) à deux points (*x*, *z*) par des cliquets de sûreté, ledit dispositif de mise en position étant fixé à la plaque roulante et comprenant des moyens pour permettre au mécanisme de travail de tourner autour d'un premier axe orthogonal par rapport à la plaque tournante, un deuxième axe orthogonal par rapport audit premier axe et un troisième axe tournant autour et orthogonal par rapport audit deuxième axe, afin de changer la position de l'axe de la broche de la position horizontale à la position verticale, permettant ainsi la taille, l'équarrissage, le polissage et ces mêmes opérations sur les surfaces et las bords de la tranche.

2. Machine portative selon la revendication 1, caractérisée en ce que sa transmission de mouvement est logée dans une enveloppe de protection fermée (4A) du mécanisme de travail (2).

3. Machine selon la revendication 2, caractérisée en ce que le mécanisme de travail (2) logé dans l'enveloppe de protection fermée (4A), consiste dans une transmission avec une surmultiplication (5), un moteur oléodynamique (6), un essieu (7), un robinet à boisseau sphérique (8), une soupape de régulation de passage d'huile (9), une manette (10) et des sphères tournantes (11).

4. Machine selon la revendication 1, se caractérisée en ce que le dispositif de mise en position (4) comprend un bloc de base (12) qui possède une grosse cheville (13) sur l'axe de laquelle un support intermédiaire (14) peut tourner autour du deuxième axe, et un dispositif de régulation de hauteur (15), sur lequel le mécanisme de travail (2) est monté pour la rotation sur ledit support (14) autour du troisième axe.

5. Machine selon la revendication 4, caractérisée en ce que ledit dispositif de régulation de hauteur (15) consiste dans deux parties fixées (16, 17) séparées par deux colonnes (18), et une partie (19), sur laquelle est monté le mécanisme de travail (2), qui a la capacité de glisser entra ces deux parties fixées.
